# EUROPEAN PATENT APPLICATION

(11) **EP 2 218 487 A2**
(43) Date of publication of application: **18.08.2010**
(21) Application number: 10250182.2
(22) Date of filing: 03.02.2010
(51) Int. Cl.: A63F 13/12, H04L 29/06, G07F 17/32

(54) **Methods and systems for multiplayer elimination tournaments**

(30) Priority: 13.02.2009 US 370876
(71) Applicant: Waterleaf Limited, Douglas Isle of Man IM1 1JA (GB)
(72) Inventor: Toompere, Ragnar c/o Waterleaf Limited, Isle of Man (GB)
(74) Representative: Butler, Michael John

(57) **Abstract**

Disclosed herein are methods, devices, and systems for on-line multiplayer elimination tournaments. Preferably, a number of client devices join a tournament hosted by a server device. These client devices contend with one another at a game of chance over a series of rounds. At least one client device may be eliminated by each round. After the final round, the client devices remaining share a prize amount.

## Description

### BACKGROUND

The Internet and other communication networks have facilitated the growth of real-time or near-real-time networked gaming. Players from around the world can log on to a gaming server and enjoy playing a computer-mediated game of chance over a communication network, such as the Internet. These games can be played for fun, entertainment, or gain.

Many games of chance have been implemented and deployed so that they can be played over communication networks. Networked games have the advantage of reaching a market segment of players who would prefer to play these games from the comfort of their own homes, as well as the traditional market of players who frequent casinos.

Operators of networked games compete with one another for players. The more players that play with a given operator, the more revenue that operator is able to generate. Therefore, operators of networked games seek to differentiate their services by offering new and unique variations of games that may attract more players.

While some games of chance may be played individually, other games may involve multiple human players contending with one another. However, current multiplayer games of chance can have an unpredictable duration, and may pay out winnings to only a single winner. Thus, one such means of differentiating networked games is to offer novel features that provide for a more predictable game duration, and/or give players a chance to increase their odds of winning a particular game.

### OVERVIEW

Disclosed herein are methods, devices, and systems for conducting an online multiplayer elimination tournament in which a substantial number of players are paid out winnings at the end of the tournament. Preferably, such a tournament consists of a series of rounds in which multiple players contend with one another in a game of chance. The game of chances supported by such a tournament may include, but are not limited to, blackjack, poker, roulette and video slot machines.

In order to participate in the tournament, each player may log on to a gaming server and pay a tournament entry fee. This fee may be deducted from an account associated with the respective player. Once a requisite number of players have entered the tournament, play begins. In each round, play occurs according to input from the players and random events generated by the server. This input and these random events preferably occur according to a game of chance. During the round, each player may win or lose some number of points, or tournament credit, where these winnings or losses represent each player's respective performance in the round. At the end of each round, a number of players may be eliminated from the tournament.

After a number of rounds, the remaining players may be considered winners. Accordingly, they preferably share a prize amount. This prize amount may be based on tournament entry fees collected from all players at the beginning of the tournament, and players may share this prize amount equally or unequally. Preferably, each player's share of the prize amount is credited to an account associated with the player.

Each round may be of a fixed duration, and the tournament may consist of a pre-determined number of rounds. Thus, a player deciding whether to enter the tournament knows approximately how much time the tournament will require. Knowing the total duration of the tournament may encourage some potential players to participate, since they will know in advance how much time to budget for the tournament. Additionally, sharing a prize amount amongst a group of winners, rather than a single winner, may incentivize more players to participate in these tournaments.

Furthermore, the number of players to eliminate during each round may be based on a variety of factors. In one embodiment, a fixed percentage of the number of players that entered the tournament may be eliminated in each round. In another embodiment, half of the players participating in each round may be eliminated by the round. Additionally, players in the tournament may be placed at one or more virtual tables, where each virtual table supports game play between just the players at that virtual table. Then, each subsequent round may contain fewer virtual tables than the previous round, and the number of players eliminated in each round may be determined so that all seats each virtual table are filled in the subsequent round.

Moreover, a tournament in which a number of players are eliminated in each round creates suspense, and may attract observers. Increasing the number of either participants or observers may, in turn, increase the popularity of the tournament. Thus, the tournament's operator and/or organizer may ultimately benefit from these features.

These and other aspects and advantages will become apparent to those of ordinary skill in the art by reading the following detailed description of exemplary embodiments, with reference where appropriate to the accompanying drawings. Further, it should be understood that the foregoing overview is merely for purposes of illustration and is not intended to limit the scope of the invention as claimed.

### BRIEF DESCRIPTION OF THE DRAWINGS

Figure 1 is a depiction of a client / server architecture in accordance with an example embodiment;
Figure 2 is a flow chart of a method for conducting a multiplayer elimination tournament in accordance with an example embodiment;
Figure 3A is a diagram depicting calculation of a prize amount in accordance with an example embodiment;
Figure 3B is a chart depicting elimination methods in a multiplayer elimination tournament in accordance with an example embodiment;
Figure 4 is another flow chart depicting a series of rounds in a multiplayer elimination tournament in accordance with an example embodiment;
Figure 5 is message flow diagram depicting client / server transactions in accordance with an example embodiment;
Figure 6 is a flow chart depicting a multiplayer elimination tournament in accordance with an example embodiment; and
Figure 7 is another flow chart depicting a round of a multiplayer elimination tournament in accordance with an example embodiment.

### DESCRIPTION

In the embodiments described below, a multiplayer elimination tournament is provided in which participating players can win portions of a prize amount by surviving through all rounds of the tournament. The duration of the multiplayer elimination tournament may be pre-determined and tournament rules may provide an extent of in-the-money finishing positions that increase the likelihood that any given player will finish the tournament with positive earnings.

Such a tournament design may increase the attractiveness of multiplayer tournaments. This, in turn, may cause more players to enter such tournaments, leading to tournaments offering greater prize amounts, thereby further increasing the attractiveness of such tournaments.

### I. Client / Server Architecture and Interactions

Players may participate in a multiplayer elimination tournament using distributed client devices. Tournament play is managed by a server device. U.S. Patent Application Serial No. 10/513,140 discloses an example gaming system whereby multiple distributed client devices may engage in gaming activity via a server device over a computer network such as the Internet or a private network. The entire contents of U.S. Patent Application Serial No. 10/513,140 are incorporated by reference herein, as if fully set forth in this description. In one embodiment, the methods described herein are implemented in a gaming system of the type disclosed in the U.S. Patent Application Serial No. 10/513,140. However, other embodiments may involve other arrangements of client devices and server devices.

For instance, a server device may be a computing device containing a processor and a memory, and supporting a general purpose operating system, such as MICROSOFT WINDOWS® or Linux. Alternatively, a server device may be an embedded system, or may support a real-time operating system. Preferably, a server device comprises one or more each of input devices, output devices, and network interfaces. For example, a server device may support input via a keyboard, keypad, mouse, touchscreen, and so on. A server device may also support output via a screen, a monitor, a printer or some other device, and may include network interfaces, such as various types of wireline or wireless transceivers. Furthermore, a server device may consist of a single physical or logical component, may be distributed across multiple physical or logical components, or may be combined, in whole or in part, with other components of the gaming system.

Regardless of the exact implementation, a memory of such a server device may contain machine instructions, executable by a processor, to carry out, in whole or in part, any of the methods described herein. Alternatively or additionally, such a server device may contain a machine readable medium for use with a computing device, the medium containing program instructions executable by the computing device to carry out, in whole or in part, any of the methods described herein.

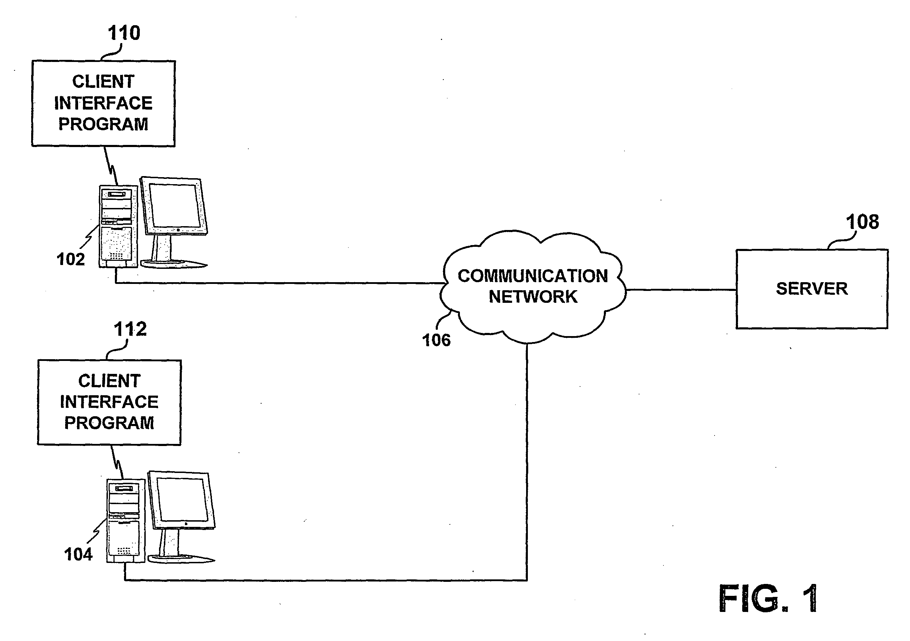

Figure 1 depicts one example of a gaming system for providing a multiplayer elimination tournament. The gaming system includes client devices 102 and 104 each coupled through a communication network 106 to a server device 108. The client devices 102 and 104 allow players (or users, more generally) to play tournament games by, for example, presenting the player with a display of tournament game play. Typically, one player uses a client device at any particular point in time, but it is possible for more than one player to share a client device.

Accordingly, the client devices 102 and 104 may receive user input and transmit a representation of the user input through the communication network 106 (such as the Internet) to the server device 108 via a wireline or wireless interface, for example. Thus, the client devices 102 and 104 may be a slot machine at a live casino, for example, or a personal computer allowing a user to participate in online gaming. The example embodiments are not limited to any particular class or model of computer employed for the client devices 102 and 104. For instance, these client devices could also be laptop computers, cellular telephones, personal digital assistants (PDAs), or any other computing device capable of accessing a wireless or wireline network. Of course, more than just client devices 102 and 104 may be coupled to server device 108, thus allowing more players to participate in multiplayer elimination tournaments.

In one embodiment, the system illustrated in Figure 1 may be in the form of an online casino, which may include rooms or modules for various games of chance such as poker, blackjack, roulette, video slot machines, and so on. In another embodiment, server device 108 may support multiple instances of one or more games of chance in such an online casino, each instance potentially operating independently of all other instances.

The player at a client device may select to play one or more casino games. Each game offered by the casino may include a server process, which is executable in the server device, and a client process, which is executable in the client device. The server process generates, upon request of the client process, one or more random events upon which an outcome of the casino game depends. Such random events can correspond, for example, to the roll of a die, the spin of a roulette wheel or the deal of a playing card, depending on which particular casino game is being played. The client process, on the other hand, presents to the user or player a simulation of the casino game being played. The client process also enables the player to place wagers on, and to control the progress of, the casino game, and displays to the player the outcome of the game as a function of the random events generated by the server process.

It should be appreciated that, for the embodiments described herein, the terms "random" or "randomly" shall refer to any realizable process of randomly generating events. Such processes shall include, but not be limited to, generating events without a deterministic pattern of occurrences. Additionally, these processes may be pseudorandom, thus resulting in a deterministic pattern of occurrences that exhibit some form of statistical randomness.

In order to communicate with the server device 108, the client devices 102 and 104 may operate under control of casino client interface programs 110 and 112. The client interface programs 110 and 112 may include a menu subsystem or menu selection system that displays to the player a menu of casino games that are offered by the particular online casino. The client devices 102 and 104 may present a graphical user interface ("GUI") including the menu selection system to the players. The players are then able to select any one of the games that they wish to play.

When selecting a particular game for the first time, the casino client interface programs 110 and 112 preferably cause a software program corresponding to the client process for the particular casino game to be downloaded from the server device 108 to the client devices 102 and 104. The software program may be stored locally on a storage device associated with the client device, such as a hard disk drive, a solid state drive, a memory card, or random access memory. Once downloaded, the player can then install the software program on the client devices 102 and 104. Once the client process for a particular casino game has been downloaded and installed in this manner, the casino game may be able to be played without a further download.

In one particular menu selection system, a list of games that are available for play at an online casino is displayed to the player as an unstructured, tiled display of individual game display windows. Each game display window includes a name of a corresponding game, as well as salient details and rules associated with the game. Where a client, process associated with a particular game has not yet been downloaded from the server device 108 to the client devices 102 and 104, the corresponding game display window in the menu subsystem includes an icon that can be activated by the player to initiate a download of the corresponding client process from the server device 108 to the client devices 102 and 104.

The server device 108 may categorize each one of the different casino games available on the server device 108 into one or more different categories. Examples of such categories include, for example, progressive jackpot games, table games, video poker games, video slot machine games, and new games that have not previously been accessible through the menu system. The categorization can also include other categories of casino games, namely favorites, which are games that are preferred by the player, and recommended games. Any casino game can be categorized into more than one different category. For example, a particular game may be classified as a video poker game, as well as being categorized as a jackpot game. The client interface programs 110 and 112 can then present the menu selection system, including the categorized casino games, to the user using any type of GUI or other display techniques.

Many of the games presented by the client interface programs 110 and 112, such as video slot machines and video poker, generally have a pay table comprising one or more game outcomes, each that have a corresponding payout for a wager on the game. The payouts are generally inversely proportional to the probability of occurrence of the game outcomes, with the top payout being commonly referred to as a jackpot prize. The jackpot prize may be a fixed amount or may be a progressive jackpot prize which is funded by a pre-determined portion of each eligible wager made by a player of the game. The progressive jackpot prize may be funded by wagers of players playing the game at a single establishment, or may be a wide area progressive jackpot prize that is funded by wagers of players playing the same game at competing establishments. Examples of the operation of wide area progressive jackpot games are disclosed in United States Patent Application Serial No. 10/532,850, which is entirely incorporated herein by reference, as if fully set forth in this disclosure.

Players may also participate in multiplayer tournament games. Such games may comprise a multiplayer game, such as poker, blackjack, roulette, or video slot machines, played out over a series of rounds. Each participating player in a multiplayer tournament is presented with a GUI on his or her respective client device. The GUI presents to the player a suitable display of tournament play with appropriate icons that enable the player to make his or her own desired tournament play decisions, as well as to monitor the progress of the tournament by viewing the game play decisions of the other participating players in the same instance of the tournament.

The server device 108 may monitor and control game play within such a tournament. For example, the server device 108 may operate a clearing account facility that has a clearing account corresponding to each online casino website or casino game to which the server device 108 corresponds. Analogously, each online casino or virtual room may include a corresponding credit account facility with a credit account corresponding to each player who participates in a game offered by the online casino. To participate in the tournament, the player is preferably required to pay a tournament entry fee. One portion of the tournament entry fee may be a contribution to a prize amount and the remaining portion may be a fee for the organizers of the tournament. The prize contributions from all the participating players in the tournament preferably are pooled to form a prize amount.

The prize amount may be monetary in nature, or may be non-monetary. For example, the prize amount may consist of some quantity of dollars, euro, pounds, or yen. Alternatively, the tournament prize may be based on some non-monetary currency, such as a virtual currency, or may take the form of a completely non-monetary award. These latter types of prize amounts may be able to be exchanged for monetary currency.

The server device 108 can manage receipt of the tournament entry fee from a player by debiting the individual credit account of the player by an amount equivalent to the tournament entry fee. Upon debiting the player's credit account, the server device 108 may receive an indication of receipt of the tournament entry fee from the player. Each player may fund their associated credit account prior to their participation in the game. For this purpose, each online casino, casino game, or the server device 108 may include credit-dispensing means (not shown) capable of dispensing credit to any player who wishes to participate in the game.

The player may purchase credit by means of conventional credit or debit card payment facilities. Whenever a player purchases credit from the credit-dispensing means, the corresponding online casino or server device 108 credits that player's credit account with an amount equivalent to, or based on, the quantity of credit purchased by the player.

At the start of the tournament, each participating player is preferably provided with an identical quantity of points (e.g., tournament credit), which may be used to determine the ultimate winner(s) of the tournament. The points are "play money" that the players use to make wagers in the tournament. Loss of points generally does not result in a loss of real money by the players. When a player enters a tournament, the only real money that the player can lose through participation and wagering is the tournament entry fee. Points may be referred to as play money, in order to provide the illusion that the player is wagering real money on each round. However, points typically exhibit no actual monetary value aside from having a seat in the tournament.

Tournaments can take many forms involving many different games and varying lengths. Within a video slot machine tournament, for example, players may play as much as desired over a certain time period (e.g., during the course of a month), or players may play as much as desired for a set time period (e.g., 90 minutes, and possibly players can divide the time into intervals to play the 90 minutes over the course of a few days).

Each player consumes his or her points (e.g., play money) by making wagers on turns of the game. Players may attempt to acquire more points than everyone else in the tournament, or to acquire at least enough points to be eligible for a portion of the prize amount. The prize amount is usually distributed among the top-placed finishers in the tournament.

Players in some types tournaments may stop playing whenever desired and do not have to use up the full time allotment. For example, players can view a leader board to determine their ranking, and may wish to stop playing when they are sufficiently ahead in the rankings so as not to risk losing points.

If there is more than one round in a tournament, the number of players in each successive tournament round is typically smaller than the number of players in each preceding round. For example, at the end of a round, a predetermined number of players who have performed best during that round, or cumulatively, will proceed to the next round of the tournament. The remaining players are preferably eliminated. The players who have performed best in any round are those having the most points. However, the players' points may be measured based on the each respective player's total winnings, their winnings in the current round, or their current point balance.

In blackjack and poker tournaments, on the other hand, players may be required to play continuously and are eliminated as they exhaust their entire stake of points. Ultimately, the number of surviving players is whittled down, round by round, until a sufficiently small number of players remain so that they are all "in-the-money," i.e., entitled to a share of the prize amount.

A server device operating such a tournament may allow multiple non-participating observers to watch the progress of the tournament. These observers may be either fully non-participating individuals, or players who were eliminated from the tournament in a previous round. As the tournament progresses, these observers may become more interested in finding out who the winners will be. Furthermore, the server device may allow these observers to place side-wagers on various outcomes of the tournament.

### II. Multiplayer Elimination Tournaments

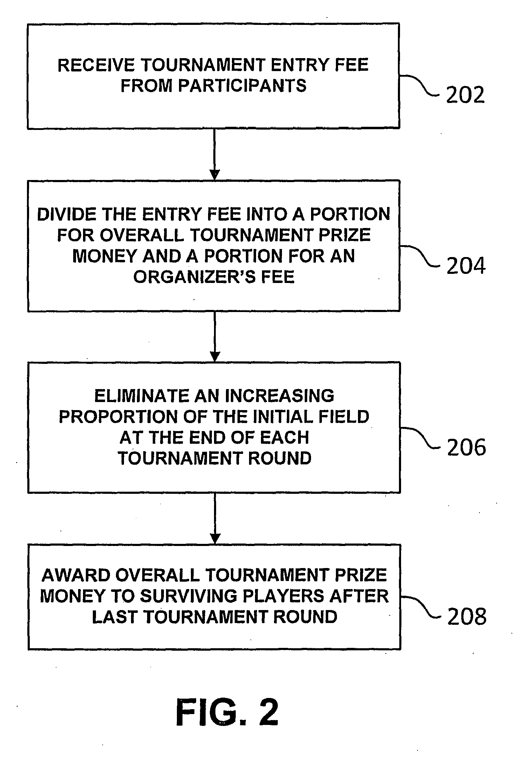

Figure 2 is a flowchart depicting generic functional steps for performing a multiplayer elimination tournament according to one possible embodiment. Initially, each player in the tournament will pay an entry fee as shown in block 202. The entry fee will preferably cover the player's contribution to the prize amount as well as the fee paid to an organizer of the tournament. The prize amount for the tournament may be formed by accumulating each player's prize amount contribution.

The tournament may comprise a pre-determined number of rounds, each preferably of fixed duration. In one embodiment, an increasing proportion of the initial field of the tournament may be eliminated in each succeeding round, as shown in block 206. (Note that the same number of participants may be eliminated in each round, thus the proportion of participants eliminated in each round with respect to the number of participants that entered the round increases.) Alternatively, the size of the field may be adjusted in other ways by the outcome of each round. For instance, half of the players entering each round may be eliminated by the round, thus resulting the number of players in each subsequent round being half the number of players that entered the previous round. The prize amount may be awarded to the remaining participants after the last round of the tournament, at block 208.

As an illustrative example, a multiplayer elimination tournament could be defined with the following parameters: a tournament entry fee of $50, an initial tournament play money credit of 500 points, a tournament organizer's fee of $5, a tournament duration of 9 rounds, a round duration of 10 minutes per round, 100 participating players, and an elimination rate of 10 participants per round.

In this tournament, the $5 of each player's tournament entry fee would be contributed to the tournament organizer, for a total of $500 going to the tournament organizer. Thus, $45 of each player's tournament entry fee would be contributed to the tournament prize amount, for a total of $4500 of tournament prize amount.

Several parameters of such a tournament may be configurable by the tournament organizers or some other entity. These parameters include, but are not limited to: the number of tournament rounds, the duration of each tournament round, the number of players entering the tournament, the proportion of the players entering the tournament that is eliminated by each round, and the number of in-the-money finishing positions.

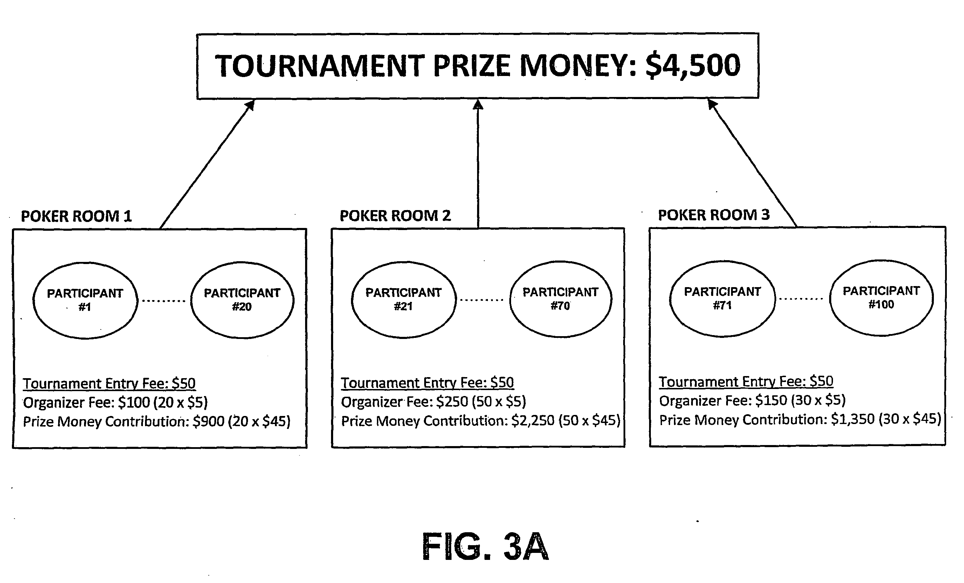

Figure 3A conceptually illustrates a multiplayer elimination tournament as described above. This illustration uses the game of poker as an example, but other games could be played instead. The tournament has a total of 100 participants playing one or more instances of the game from each of three different online casinos or poker rooms. Each participant has paid the $50 entry fee. For the tournament as a whole, there is a total of $4500 (i.e. $45 x 100) of tournament prize amount that will be paid out to the top finishers of the tournament.

It should be understood that the rooms supported by the server device are preferably virtual and players may be assigned randomly to rooms. Additionally, each room may support one or more virtual tables, around which players may be seated. Preferably, players seated at a virtual table play against only the other players at that virtual table, though their overall tournament performance may be compared with players at other tables. The use of such virtual tables enhances the realism of the game, and facilitates certain games of chance in which a player's strategy may be based on his or her position at the table.

For example, in blackjack, typically one to six players are arranged in a semicircle around a dealer, where the dealer is facing the players. The game normally progresses amongst the players in the order of the seat closest to the dealer's right hand around to the seat closest to the dealer's left hand. Thus, the player seated closest to the dealer's left hand may be able to observe the played cards of all of the other players before he or she plays his or her hand. Therefore, this player may have more information on any given turn than the other players, and this information may impact how the player wagers. Accordingly, it is advantageous for a game to include such virtual tables, especially when such inclusion may impact player strategy.

The elimination strategies, such as those represented by block 206 of Figure 2, may vary based on whether virtual tables are included in tournament play. For instance, in a tournament with virtual tables, it may be advantageous to eliminate players in any given round so that the players remaining in the subsequent round fill a number of virtual tables. Thus, in the blackjack table example discussed above, in each round of the tournament there could be fewer tables, but all tables in each round would be filled with players.

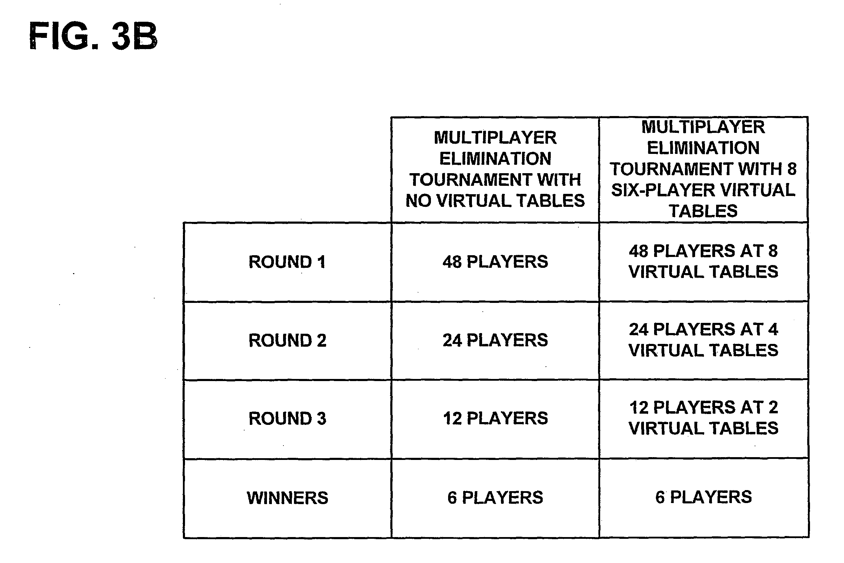

Elimination strategies for tournaments with and without tables are contrasted in Figure 3B. In an illustrative example, forty-eight players contend with one another in a three-round elimination tournament. In each round, half of the players are eliminated until there are only six players remaining. A prize amount is divided amongst these remaining players as their winnings.

Based on input from each player and random events generated by a server device, points are assigned to each player during each round. For the version of the tournament with no virtual tables, at least two methods of eliminating players may be employed. According to a first method, the players eliminated from a round are the players who have accumulated the fewest points in that round. According to a second method, the players eliminated from a round are the players who have the lowest cumulative points over all rounds played so far. Of course, players could be eliminated from a round according to different methods as well.

However, for the version of the tournament with tables, play may begin with eight virtual tables, each seating six players. Both the number of players and the number of virtual tables are cut in half for each successive round. The players eliminated from each round may be eliminated according to the first or second methods described above. Or, the players eliminated from each round could be determined according to a third or a fourth method. According to the third method, the three players at each virtual table who have accumulated the fewest points in the round, out of all of the players at that virtual table, are eliminated. According to the fourth method, the three players at each virtual table who have the lowest cumulative number of points, out of all players at that virtual table, across all rounds played so far are eliminated.

Thus, when virtual tables are included in the tournament, additional methods of eliminating players from the tournament may be utilized. This provides the advantage of always having all positions at each virtual table filled, so that the game playing experience is authentic.

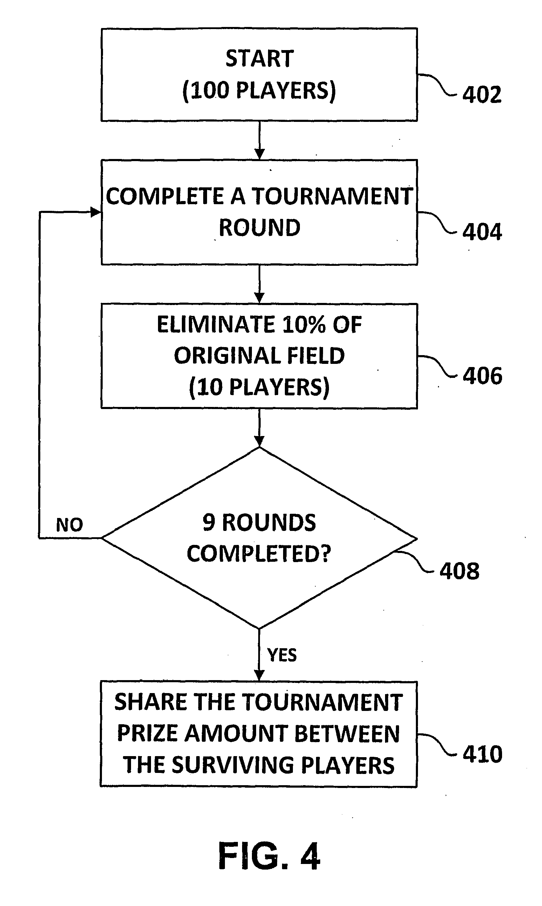

Figure 4 is a flowchart depicting the progress of the tournament. For purposes of further illustrating a tournament with virtual tables, an example tournament with 100 players dividing equally amongst 10 virtual tables is provided. The tournament is assumed to be carried out according to the game of poker, but other games could be played instead. For convenience, the tournament will be assumed to commence at time T=00:00. The variable T preferably uses hh:mm notation to represent hours and minutes, respectively. Thus, T=01:23 represents the passing of one hour and twenty-three minutes.

At block 402, the 100 players are accommodated in 10 different tables (i.e., 10 players per table). Alternatively, instead of dividing the players just amongst tables, the players may be divided amongst rooms (wherein each room may contain zero or more tables).

At block 404, round 1 of tournament play commences at T=00:00 and terminates at T=00:10. At block 406, 10% of the original players are eliminated, leaving 90 surviving players. Players may be eliminated according to any of the four methods described above, or according to other methods.

At block 404, round 2 of tournament play commences at T=00:10 and terminates at T=00:20. At block 406, a further 10% of the original number of players are eliminated (i.e. those with the smallest credit balances at the end of the round), leaving 80 remaining players.

At block 404, round 3 of tournament play commences at T=00:20 and terminates at T=00:30. At block 406, a further 10% of the original number of players are eliminated, leaving 70 surviving players.

At block 404, round 4 of tournament play commences at T=00:30 and terminates at T=00:40. At block 406, a further 10% of the original number of players are eliminated, leaving 60 surviving players.

At block 404, round 5 of tournament play commences at T=00:40 and terminates at T=00:50. At block 406, a further 10% of the original number of players are eliminated, leaving 50 surviving players.

At block 404, round 6 of tournament play commences at T=00:50 and terminates at T=01:00. At block 406, a further 10% of the original number of players are eliminated, leaving 40 surviving players.

At block 404, round 7 of tournament play commences at T=01:00 and terminates at T=01:10. At block 406, a further 10% of the original number of players are eliminated, leaving 30 surviving players.

At block 404, round 8 of tournament play commences at T=01:10 and terminates at T=01:20. At block 406, a further 10% of the original number of players are eliminated, leaving 20 surviving players.

At block 404, round 9 of tournament play commences at T=01:20 and terminates at T=01:30. At block 406, a further 10% of the original number of players are eliminated, leaving 10 surviving players.

Finally, at block 410, the 10 remaining players share in the prize amount. In such an arrangement, the prize amount may be distributed equally between each surviving player (e.g., each player wins $450), which is 10 times each player's prize amount contribution, and 9 times each player's initial wager.

It will be appreciated that this tournament model preferably results in a multiplayer tournament of finite duration, as each round lasts a pre-determined time, or at least a predictable or bounded time. Thus, a would-be participant will know the exact or approximate duration of the tournament. Furthermore, the rule whereby 10% of the original number of participants is eliminated after each round of the tournament results in an increasing percentage of the remaining field being eliminated after each round, as illustrated in Table 1, which adds to the suspense and excitement of the tournament. This, in turn, may increase the popularity of such tournaments amongst both players and observers.

**Table 1: Illustration of per-round player elimination in a tournament.**

| **Round No.** | **Players eliminated** | **Players Remaining** | **% of field eliminated** |
|---|---|---|---|
| 1 | 10 | 90 | 10.0 |
| 2 | 10 | 80 | 11.1 |
| 3 | 10 | 70 | 12.5 |
| 4 | 10 | 60 | 14.3 |
| 5 | 10 | 50 | 16.7 |
| 6 | 10 | 40 | 20.0 |
| 7 | 10 | 30 | 25.0 |
| 8 | 10 | 20 | 33.3 |
| 9 | 10 | 10 | 50.0 |

Still further, the tournament represented in Table 1 has 100 participating players and a duration of only 90 minutes. These characteristics compare favorably with, for example, tournaments of more players that may take an unbounded amount of time to complete. Lastly, in this embodiment, 10% of participating players will finish in-the-money and will each win 10 times their respective prize amount contributions. It is anticipated that these factors, in combination, will increase the attractiveness of such multiplayer tournaments to players, causing more players to enter such tournaments.

In an alternate embodiment, it is possible for a player to be eliminated from the multiplayer tournament by loss of that player's entire stake of tournament credit. Players may begin the tournament with a fixed amount of tournament credit, or points. During each round of the tournament, players may gain or lose points. Once a player's point total reaches zero, the player is automatically eliminated. Thus, players may be eliminated in this manner during any round of the tournament.

In order to accommodate this manner of player elimination, the tournament may provide for the number of players to be eliminated at the end of any round to be 10% of the original number of participants less the number of players that have been eliminated during that round through exhaustion of tournament credit.

For example, in this embodiment, 10 players (i.e. 10% of the original participants) are to be eliminated at the end of round 1 of the tournament. Suppose that two players are eliminated during round 1 due to complete loss of their tournament credit. In this situation, only 8 players would be eliminated at the end of the round instead of 10. As a further example, suppose that 12 players are eliminated during round 6 of the tournament due to complete loss of their tournament credit. In this case, no additional players will be eliminated at the end of round 6. Furthermore, only 8 players will be eliminated at the end of the subsequent round of the tournament, round 7, assuming that no further players are eliminated during round 7 by loss of their tournament stakes.

### III. Tournament Transactions

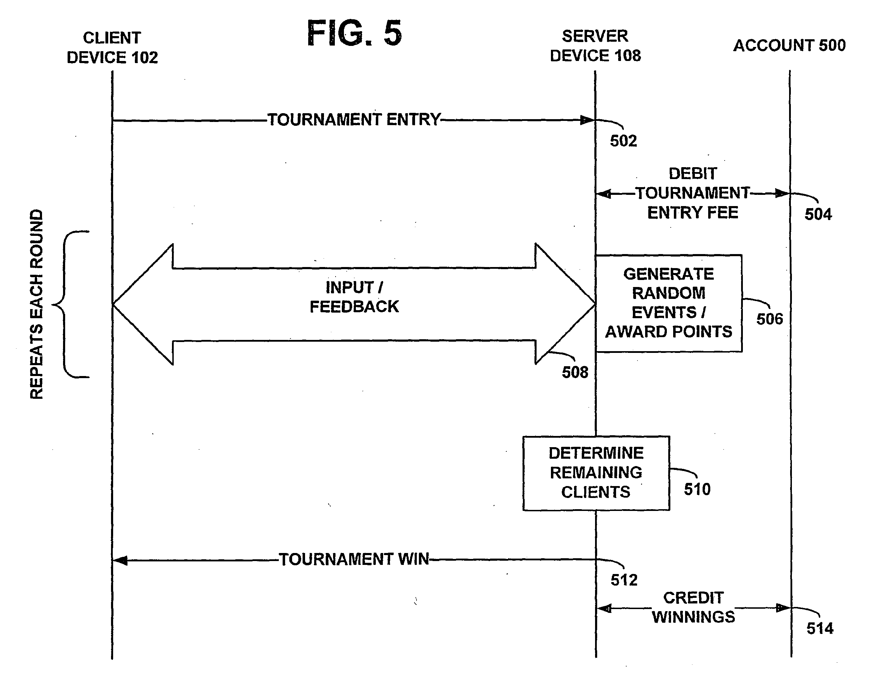

A multiplayer elimination tournament, as described by the various embodiments herein, involves one or more transactions between any given client device and a server device. These transactions occur on behalf of a player using the client device in order to participate in the tournament. The tournament may be of a game of chance, such as but not limited to poker, blackjack, roulette, and video slot machines. In Figures 5-7, these transactions are described in more detail.

Figure 5 depicts a message flow between the client device 102, the server device 108 and an account 500. Preferably, the account 500 is associated with a player who utilizes the client device 102. The account 500 may reside with or be co-located with the server device 108, or the account 500 may be a standalone component, or an element of another device.

At step 502, the client device 102 transmits a tournament join indication to the server device 108. This tournament join indication preferably specifies that the client 102 is seeking to join a tournament hosted by the server device 108. The tournament join indication may be part of a more involved process in which the player associated with the client device 102 logs into the server device 108, the server device verifies the identity of the player, the client device 102 downloads gaming software from the server device 108, and/or the client device 102 executes this software. Furthermore, player may, via the client device 102, authorize the server device 108 to debit a payment mechanism of the client device 102. This payment mechanism may be, for example, a bank account, a debit card, or a credit card. Thus, monetary currency can be traded in for points in the account 500. In addition to client device 102, potentially many other client devices may also join the tournament.

At step 504, the server device 108 debits the account 500 by a tournament entry fee. Part of this tournament entry fee may be contributed to a prize amount that is divided between the winners of the tournament. Another part of the tournament entry fee may be contributed to the organizers of the tournament. Preferably, such a tournament entry fee is collected from each player / client device pair that joins the tournament, and the prize amount is based on the sum of these tournament entry fees.

At steps 506 and 508, the server device 108 conducts tournament play between all client devices that have entered the tournament. Preferably, the tournament consists of a number of intermediate rounds followed by a final round. Each of these rounds may be of a pre-determined duration. Additionally, the number of rounds in the tournament may be fixed. For instance, the number of rounds may be based on the number of client devices participating in the tournament.

As represented by steps 506 and 508, each round may consist of the client device 102 transmitting input to the server device 108, the server device 108 randomly generating events, and the server device 108 transmitting feedback to the client device 102. The feedback may be based on the input from the client device 102 and any other client device in participating in the round, as well as the events.

Also based on the input and the events, the server device 108 may award points or tournament credit to the client device 102 and any other client device in participating in the round. "Awarding" points should include both granting a positive or negative quantity of points to a client device. Thus, at the end of each round, a client device's total points may be higher or lower than it was at the beginning of the round.

Once game play for a given round completes, all of the client devices that participated in the round are divided into winners and losers, where the winners remain in the tournament and the losers are eliminated from the tournament. This division is preferably made based on the points awarded during the round, or cumulatively over all rounds played so far, to each client device. Thus, the losing client devices may comprise a number of client devices with the fewest awarded points in the current round. Or, the losing client devices may comprise a number of client devices with the fewest cumulative awarded points over all rounds played so far. Of course, other methods of dividing client devices into winners and losers may be used. In particular, methods discussed above in reference to Figures 3B and 4 may be used to eliminate client devices based on maintaining a particular arrangement of virtual tables in the tournament.

After the final round, at step 510, the client devices remaining in the tournament are determined. These client devices share the prize amount, either equally or according to some other partition of the prize amount. If the client device 102 remains in the tournament, then the server device 108 transmits a tournament win indication to the client device 102. Furthermore, at step 512, the server device credits the account 500 with the portion of the winnings granted to the client device 102.

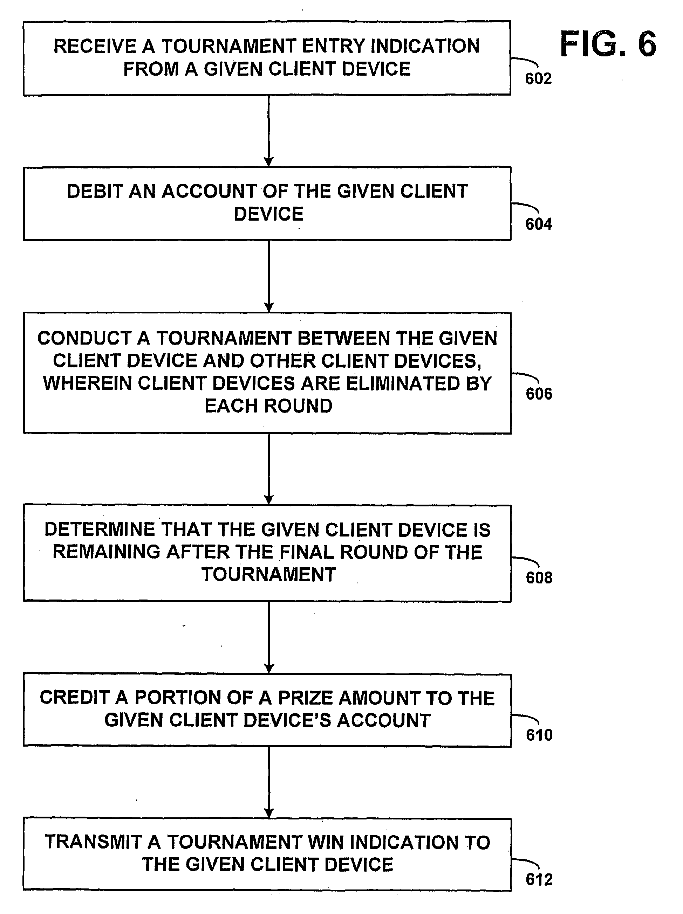

Figure 6 depicts a method, preferably performed by a server device, for conducting a multiplayer elimination tournament. At step 602, the server device receives a tournament entry indication from a given client device. Accordingly, at step 604, an account associated with the given client device is debited, preferably by a tournament entry fee.

At step 606, the server device conducts a tournament between the given client device and at least one other client device. Preferably, the tournament consists of a number of rounds, and some number of client devices are eliminated by each round.

At step 608, after the final round, the server device determines that the given client device remains in the tournament (i.e., the given client device was not eliminated by any of the rounds). Accordingly, at step 610 the server device credits a portion of a prize amount to the account associated with the given client device, and at step 612, the server device transmits a tournament win indication to the given client device.

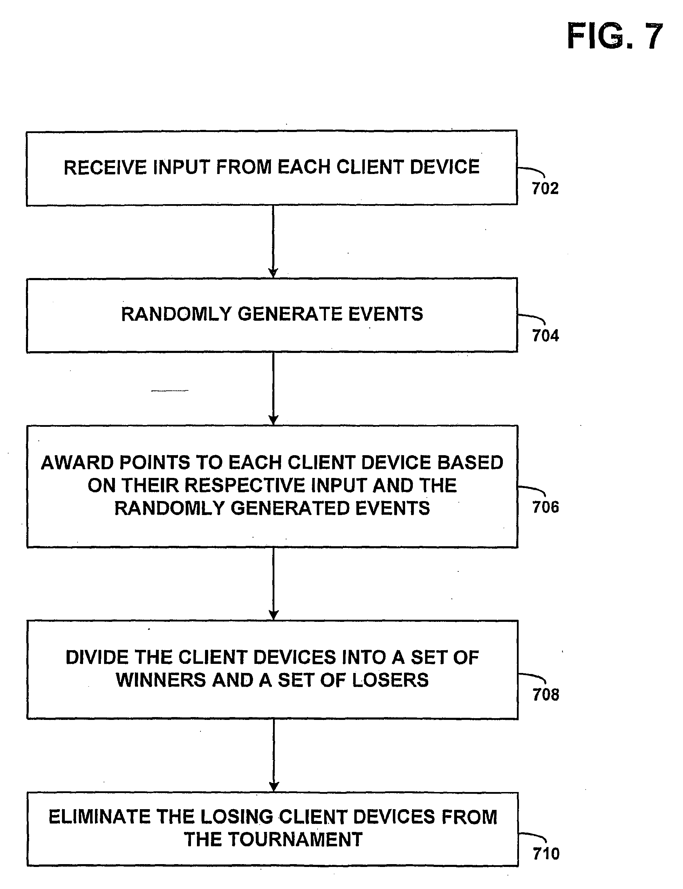

Figure 7 depicts a method, also preferably performed by a server device, for conducting a round of a multiplayer elimination tournament. Preferably, a plurality of client devices participates in the tournament.

At step 702, the server device receives input from each client device in the plurality. At step 704, the server device randomly generates events. Preferably, this input and these events conform to a game of chance.

At step 706, the server device awards points to each client device based on their respective input and the randomly generated events. Thus, potentially a different extent of points could be awarded to each client device.

At step 708, the server device divides the client devices into a set of winners and a set of losers. Preferably this division is made based at least in part on the points awarded to each client device during step 706.

At step 710, the losing client devices are eliminated from the tournament. Preferably, the winning client devices remain in the tournament and continue on to a subsequent round. However, if the present round is the final round of the tournament, all remaining client devices may be awarded a portion of a prize amount.

It should be understood that the depictions contained in Figures 5-7 are illustrative in nature. Accordingly, more or fewer steps may be used, and these steps may be performed in a different order. Furthermore, the depictions in these figures may be combined, in part or in whole.

### IV. Example Methods, Devices, and Systems

Since many modifications, variations, and changes in detail can be made to the described embodiments, it is intended that all matters in the preceding description and shown in the accompanying drawings be interpreted as illustrative and not in a limiting sense. It is intended to be understood that the following clauses further describe aspects of the present application.
(1) A system for conducting a multiplayer elimination tournament comprising:
   a given client device;
   a least one other client device;
   a server device, communicatively coupled to the given client device and to the at least one other client device, arranged to conduct the tournament between the given client device and the at least one other client device, the tournament consisting of a series of intermediate rounds followed by a final round, wherein a number of client devices are eliminated from the tournament by each round, and wherein a prize amount is divided between all client devices remaining after the final round; and
   an account, associated with the given client device, that is debited before the given client device joins the tournament, and credited if the given client device is remaining after the final round.
(2) The system of clause (1), wherein the account is debited before a beginning of the tournament.
(3) The system of clause (1) or (2), further comprising:
   at least one other account, each associated pairwise with one of the at least one other client devices, that is debited before the associated other client device joins the tournament, wherein the account and the at least one other account are each debited by a tournament entry fee, wherein the account is credited by a prize amount, and wherein the prize amount is based on a portion of a sum of all debited tournament entry fees.
(4) The system of clause (3), wherein the tournament entry fee comprises a first fee that is contributed to the prize amount, and a second fee that is not contributed to the prize amount.
(5) The system of clause (3), wherein the prize amount is divided equally between all client devices remaining after the final round.
(6) The system of clause (1), (2), (3), (4), or (5), wherein the number of client devices eliminated by each round is fixed.
(7) The system of clause (6), wherein the fixed number of client devices eliminated each round is based on a number of client devices that enter the tournament.
(8) The system of clause (1), (2), (3), (4), (5), (6), or (7), wherein the tournament comprises a contest chosen from the group consisting of poker, blackjack, roulette, and video slot machines.
(9) The system of clause (1), (2), (3), (4), (5), (6), (7), or (8), wherein each round is of a pre-determined duration.
(10) The system of clause (1), (2), (3), (4), (5), (6), (7), (8), or (9), wherein, in each respective round, points are awarded to each of the client devices participating in the round based on:
   input from each of the client devices received by the server device during the respective round, and
   events randomly generated by the server device during the respective round,
   wherein client devices are eliminated by dividing the client devices participating the respective round into a first set of winning client devices and a second set of losing client devices,
   wherein each client in the first set was awarded more points than each client in the second set,
   wherein the first set consists of the client devices that remain after the respective round, and
   wherein the second set consists of the client devices that are eliminated by the respective round.
(11) The system of clause (10), wherein, during each respective round, all of the client devices participating in the respective round are divided amongst virtual tables, wherein there are more client devices participating in the respective round than virtual tables.
(12) The system of clause (11), wherein the client devices that are eliminated by each respective round are those client devices at each virtual table awarded fewer points than a per-round, per-table threshold.
(13) The system of clause (11) or (12), wherein each virtual table has a fixed number of seats, and wherein the client devices eliminated by the respective round are chosen so that (a) a respective subsequent round contains fewer virtual tables than the respective round, and (b) each seat at each virtual table in the respective subsequent round is filled by one client device.
(14) A method, in a server device, for operating a multiplayer elimination tournament, wherein the server device is communicatively coupled to a given client device, wherein the server maintains an account on behalf of the given client device, the method comprising:
   receiving a tournament entry indication from the given client device;
   debiting the account of the given client device by a tournament entry fee;
   conducting the tournament between the given client device and at least one other client device, the tournament consisting of a series of intermediate rounds followed by a final round, wherein a number of client devices are eliminated from the tournament by each round, and wherein a prize amount is divided between all client devices remaining after the final round;
   determining that the given client device is remaining after the final round;
   crediting a portion of the prize amount to the account of the given client device; and
   transmitting a tournament win indication to the given client device.
(15) The method of clause (14), further comprising:
   collecting tournament entry fees from each of the at least one other client device, wherein the prize amount is based on the tournament entry fees collected from the given client device and each of the at least one other client device.
(16) The method of clause (14) or (15), wherein the prize amount is divided equally between all client devices remaining after the final round.
(17) The method of clause (14), (15), or (16), wherein the tournament entry fee comprises a first fee that is contributed to the prize amount, and a second fee that is not contributed to the prize amount.
(18) The method of clause (14), (15), (16), or (17), wherein the number of client devices eliminated by each intermediate round is fixed.
(19) The method of clause -(18), wherein the fixed number of client devices eliminated by each intermediate round is based on a number of client devices that enter the tournament.
(20) The method of clause (14), (15), (16), (17), (18), or (19), wherein each intermediate round is of a pre-determined duration.
(21) The method of clause (14), (15), (16), (17), (18), (19), or (20), wherein the tournament comprises a contest chosen from the group consisting of poker, blackjack, roulette, and video slot machines.
(22) The method of clause (14), (15), (16), (17), (18), (19), (20), or (21), wherein conducting each respective round comprises:
   receiving input from each of the respective client devices;
   randomly generating events;
   awarding points to each of the respective client devices based on the input received from the respective client device and the randomly generated events; and
   dividing the respective client devices into a first set of winning client devices and a second set of losing client devices, wherein each client device in the first set was awarded more points than each client device in the second set, wherein the first set consists of the client devices remaining after the respective round and the second set consists of the client devices eliminated by the respective round.
(23) The method of clause (22), wherein conducting each respective round further comprises:
   dividing all of the client devices participating in the respective round amongst virtual tables, wherein there are more client devices participating in the respective round than virtual tables.
(24) The method of clause (23), further comprising:
   dividing the client devices at each virtual table into a first group of winning client devices and a second group of losing client devices, wherein each client device in the first group was awarded more points than each client device in the second group, and
   wherein the first group consists of client devices remaining after the respective round and the second group consists of client devices eliminated by the respective round.
(25) The method of clause (23) or (24), wherein each virtual table has a fixed number of seats, and wherein eliminating client devices in a respective round comprises:
   choosing client devices to eliminate so that (a) a respective subsequent round comprises fewer virtual tables than the respective round, and (b) each seat at each virtual table in the respective subsequent round is filled by one client device.
(26) A server device for operating a multiplayer elimination tournament, wherein the server device is communicatively coupled to a given client device and at least one other client device, the server device comprising:
   a processor;
   a memory, storing a representation of an account of the given client device;
   machine executable instructions, stored in the memory and executable by the processor, to receive a tournament entry indication from the given client device;
   machine executable instructions, stored in the memory and executable by the processor, to debit the account of the given client device by a tournament entry fee;
   machine executable instructions, stored in the memory and executable by the processor, to conduct a series of intermediate rounds and a final round of the tournament between the given client device and at least one other client device,
   wherein a number of client devices are eliminated from the tournament by each round;
   machine executable instructions, stored in the memory and executable by the processor, to divide a prize amount between all client devices remaining after the final round; '
   machine executable instructions, stored in the memory and executable by the processor, to determine that the given client device is remaining after the final round;
   machine executable instructions, stored in the memory and executable by the processor, to credit a portion of the prize amount to the account of the given client device; and
   machine executable instructions, stored in the memory and executable by the processor, to transmit a tournament win indication to the given client device.
(27) The server device of clause (26), further comprising:
   machine executable instructions, stored in the memory and executable by the processor, to collect tournament entry fees from each of the at least one other client device, wherein the prize amount is based on the tournament entry fees collected from the given client device and each of the at least one other client device.
(28) The server device of clause (26) or (27), wherein machine executable instructions, stored in the memory and executable by the processor, to divide the prize amount comprises:
   machine executable instructions, stored in the memory and executable by the processor, to divided the prize amount equally between all client devices remaining after the final round.
(29) The server device of clause (26), (27), or (28), further comprising:
   machine executable instructions, stored in the memory and executable by the processor, to divide the tournament entry fee into a first fee that is contributed to the prize amount, and a second fee that is not contributed to the prize amount.
(30) The server device of clause (26), (27), (28), or (29), further comprising:
   machine executable instructions, stored in the memory and executable by the processor, to eliminate a fixed number of client devices from each round.
(31) The server device of clause (30), wherein the fixed number of client devices eliminated is based on a number of client devices that enter the tournament.
(32) The server device of clause (26), (27), (28), (29), (30), or (31), wherein each round is of a pre-determined duration.
(33) The server device of clause (26), (27), (28), (29), (30), (31), or (32),
   wherein the tournament comprises a contest chosen from the group consisting of poker, blackjack, roulette, and video slot machines.
(34) The server device of clause (26), (27), (28), (29), (30), (31), (32), or (33),
   wherein the machine executable instructions, stored in the memory and executable by the processor, to conduct each respective round comprises:
   machine executable instructions, stored in the memory and executable by the processor, to:
      receive input from each respective client device,
      randomly generate events,
      award points to each respective client device based on the input received from the respective client device and the randomly generated events, and
      divide the first plurality of client devices into a first set of winning client devices and a second set of losing client devices, wherein each client device in the first set was awarded more points than each client device in the second set, and wherein the first set consists of the client devices remaining after the respective round, and wherein the second set consists of the at least one client device eliminated by the respective round.
(35) The server device of clause (34), wherein the machine executable instructions, stored in the memory and executable by the processor, to conduct each respective round comprises:
   machine executable instructions, stored in the memory and executable by the processor, to divide all client devices participating in the respective round amongst virtual tables, wherein there are more client devices participating in the respective round than virtual tables.
(36) The server device of clause (35), wherein the client devices eliminated by each respective round are, amongst the client devices at each virtual table participating in the respective round, those awarded fewer points than a per-round, per-table threshold.
(37) The server device of clause (35) or (36), wherein each virtual table has a fixed number of seats, and wherein machine executable instructions, stored in the memory and executable by the processor, to eliminate a group of client devices comprises:
   machine executable instructions, stored in the memory and executable by the processor, to choose client devices to eliminate so that (a) a respective subsequent round comprises fewer virtual tables than the respective intermediate round, and (b) each seat at each virtual table in the respective subsequent round is filled by one client device.
(38) A method, in a server device, for conducting a round of a multiplayer elimination tournament between a first plurality of client devices, wherein the server device is communicatively coupled to the first plurality of client devices, the method comprising:
   receiving input from each of the client devices in the first plurality;
   randomly generating events according to rules associated with the tournament;
   determining, based on the received input from each of the client devices in the first plurality and the randomly generated events, at least one client device in the first plurality to remove from the tournament;
   removing the determined at least one client device from the tournament;
   establishing a second plurality of client devices consisting of client devices of the first plurality that remain in the tournament;
   transmitting output indicating elimination to each of the at least one client device;
   testing for the condition that the round is a final round of the tournament;
   if the condition is not met, conducting a subsequent round of the tournament with the second plurality of client devices; and
   if the condition is met, transmitting a tournament win indication each of the second plurality of client devices.
(39) The method of clause (38), wherein the server device maintains accounts for each client device of the second plurality, the method further comprising:
   crediting the accounts of each of the client devices in the second plurality.
(40) The method of clause (38) or (39), wherein the server device maintains a prize amount collected before the beginning of the tournament, and wherein the accounts of each of the client devices in the second plurality are credited by a portion of the prize amount.
(41) The method of clause (38), (39), or (40), wherein the received input from each of the client devices and the randomly generated events conform to a game of chance.
(42) The method of clause (38), (39), (40), or (41), further comprising:
   awarding points to each client device in the first plurality based on the input from each client device in the first plurality and the randomly generated events.
(43) The method of clause (42), wherein determining at least one client device to remove from the tournament comprises:
   dividing the first plurality of client devices into a first set of winning client devices and a second set of losing client devices, wherein each client in the first set was awarded more points than each client in the second set, and wherein the first set consists of the second plurality of client devices, and wherein the second set consists of the at least one client device to remove from the tournament.
(44) A machine readable medium for use in conducting a multiplayer elimination tournament via a computing device, the medium containing program instructions executable by the computing device for executing:
   a process for receiving a tournament entry indication from a client device;
   a process for debiting an account associated with the client device by a tournament fee;
   a process for conducting a series of intermediate rounds and then a final round of the tournament between the client device and at least one other client device,
wherein, during each round:
the computing device receives input from all client devices remaining in the tournament,
the computing device randomly generates events according to a game of chance,
based on the input and the events, the computing device assigns all client devices to one of a first set and a second set, wherein the first set of devices are to remain in the tournament, and the second set of devices are to be eliminated from the tournament, and
eliminating the second set of client devices from the tournament;
   a process for determining, after the final round, that the client device remains in the tournament; and
   a process for crediting the account of the client device a portion of a prize amount, wherein the prize amount is based on tournament entry fees collected from all client devices that participated in the tournament.

### V. Conclusion

Example embodiments have been described above. Those skilled in the art will understand, however, that changes and modifications may be made to these embodiments without departing from the true scope and spirit of the invention, which is defined by the claims. Furthermore, any numbered or lettered clauses that appear within a claim are presented for purposes of clarity and readability, and do not imply an ordered series of steps or events.

## Claims

1. A system for conducting a multiplayer elimination tournament comprising:
a given client device;
a least one other client device;
a server device, communicatively coupled to the given client device and to the at least one other client device, arranged to conduct the tournament between the given client device and the at least one other client device, the tournament consisting of a series of intermediate rounds followed by a final round, wherein a number of client devices are eliminated from the tournament by each round, and wherein a prize amount is divided between all client devices remaining after the final round; and
an account, associated with the given client device, that is debited before the given client device joins the tournament, and credited if the given client device is remaining after the final round.

2. The system of claim 1, further comprising:
at least one other account, each associated pairwise with one of the at least one other client devices, that is debited before the associated other client device joins the tournament, wherein the account and the at least one other account are each debited by a tournament entry fee, wherein the account is credited by a prize amount, and wherein the prize amount is based on a portion of a sum of all debited tournament entry fees.

3. The system of claim 2, wherein the tournament entry fee comprises a first fee that is contributed to the prize amount, and a second fee that is not contributed to the prize amount.

4. The system of claims 2 or 3, wherein the prize amount is divided equally between all client devices remaining after the final round.

5. The system of any preceding claim, wherein the number of client devices eliminated by each round is fixed, and wherein the fixed number of client devices eliminated each round is based on a number of client devices that enter the tournament.

6. The system of any preceding claim, wherein, in each respective round, points are awarded to each of the client devices participating in the round based bn:
input from each of the client devices received by the server device during the respective round, and
events randomly generated by the server device during the respective round,
wherein client devices are eliminated by dividing the client devices participating the respective round into a first set of winning client devices and a second set of losing client devices,
wherein each client in the first set was awarded more points than each client in the second set,
wherein the first set consists of the client devices that remain after the respective round, and
wherein the second set consists of the client devices that are eliminated by the respective round.

7. The system of claim 6, wherein, during each respective round, all of the client devices participating in the respective round are divided amongst virtual tables,
wherein there are more client devices participating in the respective round than virtual tables, and preferably wherein the client devices that are eliminated by each respective round are those client devices at each virtual table awarded fewer points than a per-round, per-table threshold, and preferably wherein each virtual table has a fixed number of seats, and wherein the client devices eliminated by the respective round are chosen so that (a) a respective subsequent round contains fewer virtual tables than the respective round, and (b) each seat at each virtual table in the respective subsequent round is filled by one client device.

8. A method, in a server device, for operating a multiplayer elimination tournament, wherein the server device is communicatively coupled to a given client device, wherein the server maintains an account on behalf of the given client device, the method comprising:
receiving a tournament entry indication from the given client device;
debiting the account of the given client device by a tournament entry fee;
conducting the tournament between the given client device and at least one other client device, the tournament consisting of a series of intermediate rounds followed by a final round, wherein a number of client devices are eliminated from the tournament by each round, and wherein a prize amount is divided between all client devices remaining after the final round;
determining that the given client device is remaining after the final round;
crediting a portion of the prize amount to the account of the given client device; and
transmitting a tournament win indication to the given client device.

9. The method of claim 8, wherein the prize amount is divided equally between all client devices remaining after the final round.

10. The method of claim 8 or 9, wherein the tournament entry fee comprises a first fee that is contributed to the prize amount, and a second fee that is not contributed to the prize amount.

11. The method of claim 8, 9 or 10, wherein the number of client devices eliminated by each intermediate round is fixed, and wherein the fixed number of client devices eliminated by each intermediate round is based on a number of client devices that enter the tournament.

12. The method of any of claims 8-11, wherein conducting each respective round comprises:
receiving input from each of the respective client devices;
randomly generating events;
awarding points to each of the respective client devices based on the input received from the respective client device and the randomly generated events; and
dividing the respective client devices into a first set of winning client devices and a second set of losing client devices, wherein each client device in the first set was awarded more points than each client device in the second set, wherein the first set consists of the client devices remaining after the respective round and the second set consists of the client devices eliminated by the respective round.

13. The method of claim 12, wherein conducting each respective round further comprises:
dividing all of the client devices participating in the respective round amongst virtual tables, wherein there are more client devices participating in the respective round than virtual tables.

14. The method of claim 13, further comprising:
dividing the client devices at each virtual table into a first group of winning client devices and a second group of losing client devices, wherein each client device in the first group was awarded more points than each client device in the second group, and
wherein the first group consists of client devices remaining after the respective round and the second group consists of client devices eliminated by the respective round.

15. The method of claim 13, wherein each virtual table has a fixed number of seats, and wherein eliminating client devices in a respective round comprises:
choosing client devices to eliminate so that (a) a respective subsequent round comprises fewer virtual tables than the respective round, and (b) each seat at each virtual table in the respective subsequent round is filled by one client device.
